Europäisches Patentamt

European Patent Office

Office européen des brevets

(19)

(11) Numéro de publication : **0 493 241 A1**

## (12) DEMANDE DE BREVET EUROPEEN

(21) Numéro de dépôt : **91403518.3**

(22) Date de dépôt : **23.12.91**

(51) Int. Cl.[5] : **C01G 23/00,** C01G 31/00, C01G 33/00

(30) Priorité : **28.12.90 FR 9016418**

(43) Date de publication de la demande :
**01.07.92 Bulletin 92/27**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Iltis, Alain**
**135, rue Danielle Casanova**
**F-93300 Aubervilliers (FR)**
Inventeur : **Seguelong, Thierry**
**121, avenue Pablo Picasso**
**F-92000 Nanterre (FR)**
Inventeur : **Menet, Hubert**
**58 A, rue Baechel**
**F-68470 Mitzach (FR)**

(74) Mandataire : **Dubruc, Philippe et al**
**RHONE-POULENC CHIMIE Service**
**IOM/BREVETS, 25,quai Paul Doumer**
**F-92408 Courbevoie (FR)**

(54) **Composés notamment à base de titane, de vanadium ou de nobium réduits, en particulier du type titanite, et leur procédé depréparation.**

(57)    La présente invention concerne un composé à base d'un premier élément, notamment le titane, le vanadium ou le niobium, d'une terre-rare et d'oxygène et dans lequel le premier élément présente au moins en partie un nombre d'oxydation inférieur à son nombre d'oxydation maximum.

Le procédé de préparation consiste à faire subir un traitement thermique en présence de carbone à un composé de départ comprenant ledit premier élément dans un état d'oxydation plus élevé que celui dans lequel il est présent dans le composé préparé.

On prépare ainsi par exemple $PrTiO_3$ à partir de $Pr_2Ti_2O_7$. On peut obtenir plus généralement des composés correspondant à des solutions solides soit du premier élément soit de la terre-rare dans une structure pérovskite de type $PrTiO_3$.

EP 0 493 241 A1

La présente invention concerne des composés notamment à base de titane, de vanadium ou de nobium réduits, du type par exemple titanite, et leur procédé de préparation.

Plus généralement, l'invention s'applique à la préparation de composés à base d'un premier élément choisi dans le groupe 4A ou 5A de la classification périodique des éléments, dans un état dit "réduit", d'au moins un second élément choisi parmi les terres-rares ou dans le groupe 3B ou 5B, et d'oxygène.

Par élément à l'état dit "réduit", on entend ici et pour le reste de la description, un élément présentant un nombre d'oxydation inférieur au nombre d'oxydation maximum de ce premier élément.

Des exemples d'un tel type de produits sont notamment les titanites de terres-rares. On connaît ainsi le titanite de praséodyme $PrTiO_3$. Le titane présente dans ce cas un nombre d'oxydation de 3 au lieu de son nombre habituel de 4 comme par exemple dans $BaTiO_3$3.

Le titanite de praséodyme est utilisé notamment dans la fabrication de couches anti-reflet grâce à ses propriétés d'absorption des ultra-violets du fait de la présence dans sa structure de ce titane III.

Ce produit est généralement obtenu par réaction à l'état solide de $Pr_2O_3$ et $Ti_2O_3$. Il est à noter que $Ti_2O_3$ est un produit difficile à préparer.

D'une manière générale, il est difficile de mettre en oeuvre les procédés par chamottage du type ci-dessus dans lesquels on fait réagir un oxyde du second élément précité avec un oxyde du premier élément dans lequel celui-ci se trouve déjà à l'état réduit. En effet, ces procédés nécessitent l'utilisation de produits peu courants, souvent difficiles à préparer ou à utiliser. D'autre part, le chamottage ne permet pas toujours d'obtenir un produit de pureté suffisante. Des impuretés peuvent provenir, par exemple de l'oxyde du premier élément réduit, ces impuretés résultant elles-mêmes du mode de préparation de cet oxyde.

Un premier objet de l'invention est par conséquent un procédé utilisant des produits de départ faciles à préparer et disponibles.

Un second objet de l'invention est un procédé suffisamment souple pour permettre d'obtenir une gamme importante de produits.

Un troisième objet de l'invention est un procédé permettant d'obtenir des composés de bonne pureté.

Un autre objet de l'invention est un procédé conduisant à des produits de granulométrie fine.

Dans ce but, le procédé selon l'invention de préparation d'un composé à base d'un premier élément choisi dans le groupe 4A ou 5A de la classification périodique des éléments, et présentant au moins pour une partie un nombre d'oxydation inférieur au nombre d'oxydation maximum de ce premier élément, d'au moins un second élément choisi parmi les terres-rares, ce second élément étant éventuellement partiellement substitué par au moins un troisième élément choisi dans les groupes 2A, 3B, 5B ou des actinides, et d'oxygène est caractérisé en ce qu'on fait subir un traitement thermique en présence de carbone à un composé de départ comprenant ledit premier élément dans un état d'oxydation plus élevé que celui dans lequel il est présent dans le composé préparé, au moins un dudit second élément éventuellement substitué partiellement et de l'oxygène.

Par ailleurs, les composés d'un premier groupe selon l'invention correspondent à la formule suivante :

$$(I) \qquad AB_xO_y$$

dans laquelle :

. A représente au moins un élément choisi parmi les terres-rares, A pouvant être éventuellement partiellement substitué par au moins un troisième élément choisi dans les groupes 2A, 3B, 5B ou des actinides de la classification périodique des éléments,

. B représente un élément choisi dans le groupe 4A ou 5A de la classification périodique des éléments,

x et y vérifient les inégalités suivantes :

$2,5 \leqq y \leqq 4$ et :

si $x < 1$

$1,5 + 1,25\, x \leqq y \leqq 1,5 + 1,75\, x$

Si $x \geqq 1$

$1,5 + 1,25x \leqq y \leqq 1,5 + 1,5 + 1,5x$

à l'exclusion des composés de formule (I) dans laquelle A est une terre-rare, B est le titane ou le vanadium, $x = 1$ et $y = 3$.

En outre les composés selon un second groupe de l'invention sont à base de titane aux degrés d'oxydation (III) et (IV), d'au moins une terre-rare, plus particulièrement choisie parmi le lanthane, le cérium, le néodyme et le praséodyme, cette terre-rare étant éventuellement partiellement substituée par au moins un élément choisi dans les groupes 2A, 3B, 5B ou des actinides ; et d'oxygène et ils sont caractérisés en ce que le rapport atomique du titane à la somme des terres-rares varie entre 0,90 et 0,75.

Selon de plus un troisième groupe, les composés de l'invention à base de titane aux degrés d'oxydation (III) et (IV), d'au moins une terre-rare, plus particulièrement choisie parmi le lanthane, le cérium, le praséodyme et le néodyme, cette terre-rare étant éventuellement partiellement substituée par au moins un élément choisi dans les groupes 2A, 3B, 5B ou des actinides ; et d'oxygène, sont caractérisés en ce que le rapport atomique

2

du titane à la somme des terres-rares varie entre 1 et 0,95.

Selon un quatrième groupe, les composés de l'invention à base de titane aux degrés d'oxydation (III) et (IV) d'au moins une terre-rare, plus particulièrement choisie parmi le lanthane, le cérium, le néodyme et le praséodyme, cette terre-rare étant éventuellement partiellement substituée par au moins un élément choisi dans les groupes 2A, 3B, 5B ou des actinides ; et d'oxygène et ils sont caractérisés en ce que le rapport atomique du titane à la somme des terres-rares est de 0,66.

Enfin, l'invention concerne les composés à base d'un premier élément choisi dans le groupe 4A ou 5A de la classification périodique des éléments, présentant au moins pour une partie un nombre d'oxydation inférieur au nombre d'oxydation maximum de ce premier élément, d'au moins un second élément choisi parmi les terres-rares, ce second élément étant éventuellement partiellement substitué par au moins un troisième élément choisi dans le groupe 2A, 3B, 5B ou des actinides ; et d'oxygène, à l'exception de composés correspondant à la formule suivante :

$$(I) \qquad AB_xO_y$$

dans laquelle A est une terre-rare, B est le titane ou le vanadium, x = 1 et y = 3, caractérisés en ce qu'ils sont susceptibles d'être obtenus en faisant subir un traitement thermique en présence de carbone à des composés de départ comprenant ledit premier élément dans un état d'oxydation plus élevé que celui dans lequel il est présent dans les composés préparés, au moins un dudit second élément éventuellement partiellement substitué et de l'oxygène.

Le procédé de l'invention est particulièrement intéressant dans la mesure où il permet de partir de produits dans lesquels le premier élément est à son état d'oxydation le plus élevé, c'est-à-dire les produits les plus facilement disponibles, par exemple sous forme de titane IV.

En outre, d'une manière inattendue, ce procédé donne des produits de pureté élevée, par exemple dans le cas des titanites, on n'observe pas la présence de carbure de titane, impureté classique de ce genre de produit.

Par ailleurs, il est possible, grâce au procédé de l'invention, d'obtenir des produits fins, c'est-à-dire de granulométrie inférieure à 10μm.

Enfin, les composés de l'invention forment une gamme large de produits. Parmi ceux-ci, on peut trouver des produits dans lesquels le rapport premier élément/second élément est inférieur à 1, et qui gardent cependant des propriétés d'application sensiblement identiques à celles des produits pour lesquels ce rapport est d'au moins 1. Il s'agit là d'un intérêt économique dans la mesure où le second élément, par exemple une terre-rare, est généralement un produit relativement cher.

D'autre part on peut aussi faire varier d'une manière continue l'indice de réfraction et la résistivité des composés en jouant sur le rapport premier élément/second élément et l'état d'oxydation du premier élément.

D'autres caractéristiques, détails et avantages de l'invention, seront mieux compris à la lecture de la description et des dessins annexés dans lesquels :

– la figure 1 est un spectre RX d'un composé selon une première famille de composés de l'invention (appelée ci-dessous groupe I)

– la figure 2 est un spectre RX d'un composé selon une seconde famille de composés de l'invention (appelée ci-dessous groupe II),

– la figure 3 est un spectre RX d'un composé selon une autre famille de composés de l'invention (appelée ci-dessous groupe III).

– la figure 4 est un spectre RX d'un composé selon une autre famille de composés (appelée ci-dessous groupe IV).

Les produits obtenus par le procédé de l'invention seront étudiés plus en détail dans la suite de la description. Toutefois, quelques indications générales vont être données ici au préalable pour définir plus précisément le cadre de l'invention.

Les produits concernés sont à base d'au moins trois éléments essentiels.

Le premier élément est choisi dans le groupe 4a ou 5a de la classification périodique selon le supplément au Bulletin de la Société Chimique de France n° 1, janvier 1966, à laquelle il sera fait référence pour l'ensemble de la description.

Ce premier élément peut être tout particulièrement le titane.

Ce peut être aussi le vanadium ou le niobium.

Comme on l'a vu plus haut, le premier élément présente au moins en partie, dans les composés de l'invention, un nombre d'oxydation inférieur au nombre d'oxydation maximum que ce premier élément peut présenter, nombre qui est celui correspondant généralement à l'état le plus stable dans les conditions normales.

Ainsi, le titane présente un nombre d'oxydation d'au plus 4, le vanadium et le niobium d'au plus 5. Les composés de l'invention pourront comprendre par exemple du titane à un nombre d'oxydation de 3 ou de 2 éventuellement en combinaison avec du titane à un nombre d'oxydation de 4.

On notera que le premier élément peut se présenter en partie avec un nombre d'oxydation donné et pour l'autre partie avec un nombre d'oxydation différent.

Les composés de l'invention sont à base en outre d'un second élément. Ce second élément est choisi parmi les terres-rares.

Il est bien sûr possible sans sortir du cadre de l'invention de préparer des composés mixtes, c'est-à-dire comprenant au moins deux de ces seconds éléments.

Par terres-rares, on entend ici l'yttrium et les éléments 57 à 71 de la classification. On peut citer à titre d'exemple le lanthane, le cérium, le praséodyme ou le néodyme.

Ce second élément peut être éventuellement partiellement substitué par un troisième élément. Ce dernier est choisi dans les groupes 2A, 3B, 5B ou dans le groupe des actinides.

Comme troisième élément de substitution, on peut citer plus particulièrement le calcium dans le groupe 2A, le thallium pour le groupe 3B, le bismuth pour le groupe 5B et le thorium pour les actinides.

Enfin, les composés de l'invention contiennent de l'oxygène comme dernier élément essentiel.

Une des caractéristiques de l'invention réside dans le fait que les composés précités sont préparés à partir de composés de départ à base des mêmes éléments que ceux décrits plus haut. La différence réside dans le fait que dans le composé de départ le premier élément est présent dans un état d'oxydation plus élevé que celui dans lequel il est présent dans le composé final. Il s'agira généralement de l'état d'oxydation maximale.

Par exemple, pour préparer un composé selon l'invention à base de titane III, on partira d'un composé de départ à base de titane IV.

Une autre différence entre les composés de départ et ceux selon l'invention peut éventuellement résider dans les rapports du premier élément à la somme des seconds éléments.

Comme composés de départ, on peut citer les titanates et tout particulièrement les polytitanates, c'est-à-dire les produits pour lesquels le rapport $TiO_2/MO$ ou $TiO_2/M_2O_3$ est supérieur à 1, M désignant ici le second élément. On peut citer comme exemple les composés $M_2Ti_2O_7$, M étant une terre-rare par exemple le praseodyme $Pr_2Ti_2O_7$ ou encore ceux de formule $M_2TiO_5$, de formule $M_2Ti_3O_9$ ou de formule $M_4Ti_9O_{24}$.

On peut aussi citer les vanadates et plus particulièrement les orthovanadates de terres-rares, les pyrovanadates, les métavanadates.

On peut aussi mentionner les niobates, en particulier les métaniobates et orthoniobates.

Ces composés de départ peuvent être préparés par tout moyen connu, notamment par fusion des oxydes du premier élément, $TiO_2$ par exemple avec les oxydes, hydroxydes ou carbonates correspondants.

Toutefois, selon un mode particulier préféré de l'invention, on prépare les composés de départ par une voie chimique.

On peut envisager pour cette voie chimique diverses variantes utilisant des sels des éléments constitutifs dudit composé ou bien encore des sols des oxydes de ceux-ci, dans la mesure où il est possible de les préparer.

On rappelle ici que le terme sol désigne une suspension colloïdale de particules solides dont la taille est habituellement comprise entre 100-1000 Å.

Une première variante consiste à utiliser des sels des seconds éléments avec des sols des premiers. Cette variante sera appelée voie sol-sel.

Pour plus de clarté et sans volonté de se limiter, la préparation du composé de départ va être décrite en prenant l'exemple de l'obtention d'un composé à base de titane et d'un second élément.

Ainsi, tout ce qui sera dit par la suite par cette voie chimique pourra s'appliquer à la préparation de composé à base des éléments cités auparavant, les seconds pouvant être seuls ou en combinaison.

Généralement, le sol de dioxyde de titane (par la suite sol de titane) est constitué de cristallites élémentaires de taille comprise entre 10 et 100 Å, agglomérés en amas submicroniques ayant des tailles variant de 200 à 1000 Å.

Le pH de ce sol est compris entre 0,8 et 2,5, et de préférence compris entre 1,8 et 2,2.

On préfère par ailleurs utiliser un sol dans lequel le titane est sous forme anatase.

Le sol de titane précité peut être obtenu par tout moyen connu. On peut notamment peptiser un gel de dioxyde de titane présentant une taille de cristallites élémentaires d'environ 50 Å, des amas submicroniques de 400 Å environ ainsi qu'éventuellemnt des amas de l'ordre du micron.

Ce gel est obtenu lors du procédé classique de préparation du dioxyde de titane par attaque sulfurique de l'ilménite.

La teneur de ce gel en ions sulfate est comprise entre 3 et 15 % et son acidité est telle que le pH de la suspension aqueuse (300 g/l exprimé en $TiO_2$) est compris entre 1 et 3.

Par ailleurs la teneur en poids en $TiO_2$ du gel peptisé est comprise entre 5 et 35 %.

Un autre mode de préparation d'un sol de titane est décrit dans la demande de brevet français 2633604 dont l'enseignement est incorporé ici.

Le procédé consiste à hydrolyser un composé du titane exempt de soufre en présence d'au moins un composé choisi parmi des acides présentant soit un groupement carboxyle et au moins deux groupements hydroxyles et/ou amines, soit au moins deux groupements carboxyles et au moins un groupement hydroxyle et/ou amine ou les sels de ces acides.

A titre d'exemple on peut citer parmi les composés de titane, les halogénures ou oxyhalogénures de titane comme le tétrachlorure de titane ou l'oxychlorure de titane.

Parmi les acides présents lors de l'hydrolyse, on peut citer notamment les acides tartrique, citrique, aspartique.

Selon une première étape de cette première variante, on met le sol de titane ou le sol du premier élément préparé auparavant en présence d'une solution d'un sel du second par exemple de terre-rare. Habituellement, cette solution est une solution aqueuse.

Tous les sels d'acides organiques ou inorganiques conviennent à la mise en oeuvre de l'invention dans la mesure où ils donnent un sel soluble avec le second élément notamment la terre-rare utilisée.

Toutefois, on choisit plus particulièrement les sels d'acides inorganiques parmi les nitrates ou les chlorures.

Concernant les sels d'acides organiques, ceux-ci sont choisis plus particulièrement parmi les sels d'acides carboxyliques aliphatiques saturés ou parmi les sels d'acides hydroxycarboxyliques.

Ainsi, au titre d'acides carboxyliques aliphatiques saturés, on peut citer les formiates, les acétates, les propionates.

Quant aux acides hydroxycarboxyliques, on utilise habituellement les citrates.

Bien entendu, les proportions des divers éléments sont ajustées en fonction de la stoechiométrie du composé de départ à obtenir et plus particulièrement en fonction du rapport désiré du premier élément, titane par exemple, au second élément comme la terre-rare.

On travaille dans des conditions telles que l'on évite la précipitation des sels, ce qui implique que l'on soit à un pH suffisamment acide. Par ailleurs, il faut se situer dans un domaine de concentration des éléments tel qu'il n'y ait pas apparition d'un gel, mais obtention d'un mélange des éléments dans une phase liquide ou d'une suspension homogène de l'élément du sol dans la solution des autres éléments. Ceci est obtenu en jouant sur la dilution desdits éléments.

En général, la concentration des sels dans le mélange réactionnel est comprise entre 0,1 et 5M.

A titre d'exemple d'un procédé de préparation d'un composé de départ par la voie sol-sel on pourra se référer à la demande de brevet français N° 2578240 décrivant la préparation d'un titanate de néodyme.

Selon une seconde variante du même mode de préparation par voie chimique du composé de départ, les réactifs utilisés sont des sels du premier élément et du ou des seconds éléments. Cette seconde variante est appelée voie sel-sel.

Ainsi, tout ce qui a été dit précédemment, concernant la nature de la solution et des sels reste valable.

On notera qu'en ce qui concerne le nitrate de titanyle, celui-ci peut être obtenu par réaction de l'ammoniaque sur $TiOCl_2$. Le précipité est ensuite lavé en suivant plusieurs cycles de centrifugations - repulpages afin d'éliminer les chlorures.

Le nitrate de titanyle est obtenu par redissolution du précipité lavé dans de l'acide nitrique molaire dans les proportions telles que le rapport molaire d'acide sur le titane soit voisin de 6.

Là encore, les proportions des divers sels sont ajustées en fonction de la stoechiométrie du composé de départ désiré.

En ce qui concerne la concentration de la solution des sels, celle-ci est généralement comprise entre 0,1 et 5 M.

On procède comme dans la première variante en mélangeant les sels précités.

Ensuite dans une seconde étape identique pour les deux variantes précitées, on sèche le mélange résultant de chacune des premières étapes.

Le séchage d'une part du mélange du sol du premier élément et de la solution du sel du second ou d'autre part de la solution des sels est effectué selon toute méthode connue de l'homme de l'art.

On pourra donc sécher ledit mélange par évaporation, atomisation ou nébulisation.

Toutefois, ce séchage se fait habituellement par atomisation.

On peut utiliser tout atomiseur classique, par exemple à turbine ou à buse.

Dans ce cas, la température d'entrée des gaz est habituellement comprise entre 200 et 300°C, par exemple voisine de 250°C, celle de sortie peut varier entre 120 et 200°C. On utilise une pression d'air comprise par exemple entre 2 et 3 bars.

Toutefois, il est préférable d'utiliser une atomisation selon une technique plus particulière dans laquelle on sèche le mélange en l'injectant dans un gaz ayant une vitesse suffisante pour atomiser ce mélange, de manière à obtenir un chauffage et un séchage rapide de la solution ou du mélange à sécher. Un tel effet est obtenu justement en mettant en contact le mélange avec un gaz à température élevée et présentant une vitesse élevée par rapport à la vitesse du mélange lors de son injection.

Un tel type de séchage peut être effectué dans un réacteur "flash", par exemple du type mis au point par la Demanderesse et décrit notamment dans les brevets français n° 2 257 326, 2 419 754, 2 431 321. Dans ce cas, les gaz sont animés d'un mouvement hélicoïdal et s'écoulent dans un puits-tourbillon. La suspension est injectée suivant une trajectoire confondue avec l'axe de symétrie des trajectoires hélicoïdales des gaz ce qui permet de transférer parfaitement la quantité de mouvement des gaz aux particules de cette suspension. Par ailleurs, le temps de séjour des particules dans le réacteur est extrêmement faible, il est inférieur à 1/10 de seconde, ce qui supprime tout risque de surchauffe par suite d'un contact trop long avec les gaz.

Selon les débits respectifs des gaz et de la suspension, la température d'entrée des gaz est comprise entre 400 et 700°C, la température du solide séché entre 120 et 160°C.

On obtient un produit sec présentant une granulométrie de l'ordre de quelques microns, comprise entre 1 et 10 microns par exemple.

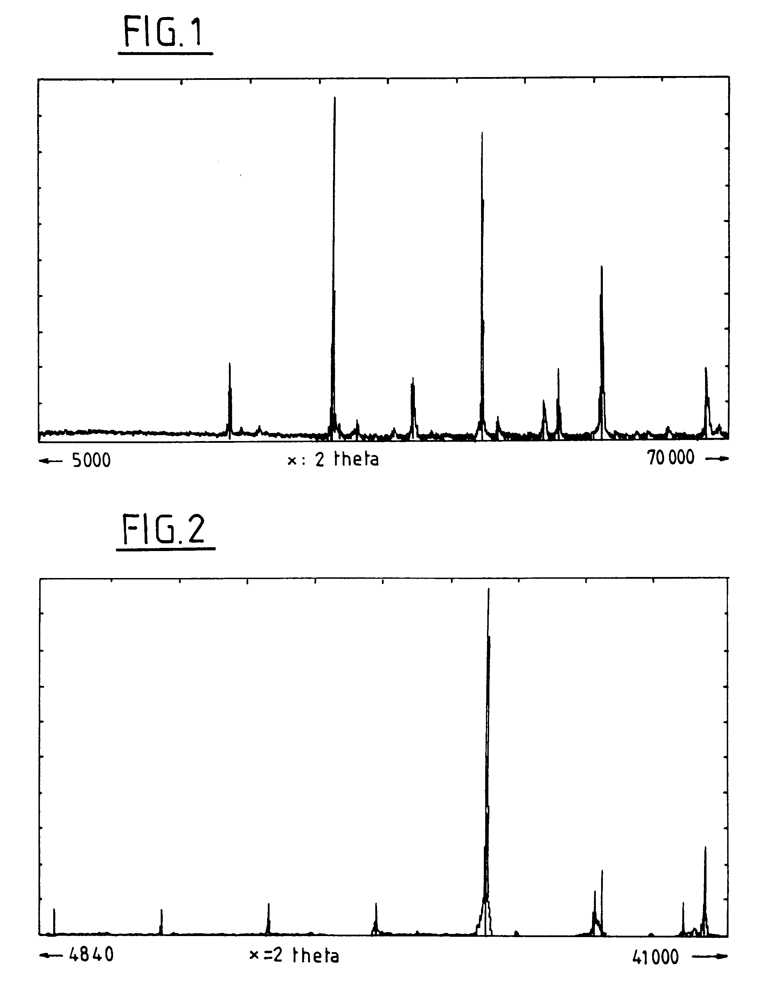

En ce qui concerne le réacteur flash mentionné plus haut, on pourra se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact.

La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite le passage imposé des gaz dans le passage réduit se fait suivant un ensemble de trajectoires confondu avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite la suspension ou la solution à traiter sous forme de liquide par le tuyau précité.

Le liquide est alors fractionné en une multitude de gouttes, chacune d'elle étant transportée par un volume de gaz et soumise à un mouvement créant un effet centrifuge.

Habituellement, le débit du liquide est compris entre 0,03 et 10 m/s.

Le rapport entre la quantité de mouvement propre de la phase hélicoïdale à celle du liquide doit être élevé. En particulier il est d'au moins 100 et de préférence compris entre 1000 et 10000.

Les quantités de mouvement au niveau du passage réduit sont calculés en fonction des débits d'entrée du gaz et de la substance à traiter, ainsi que de la section dudit passage. Une augmentation des débits entraîne un grossissement de la taille des gouttes.

Dans ces conditions, le mouvement propre des gaz est imposé dans sa direction et son intensité aux gouttes de la substance à traiter, séparées les unes des autres dans la zone de convergence des deux courants.

La vitesse du liquide est de plus réduite au minimum nécessaire pour obtenir un flot continu.

Le rapport de la masse du liquide et du gaz est bien évidemment choisi en fonction de plusieurs facteurs comme la température du fluide et l'opération à effectuer, comme la vaporisation du liquide.

Il est à noter que cette représentation et ce fonctionnement du réacteur "flash" ne sont qu'un exemple et que d'autres réalisations et fonctionnement sont envisageables.

En ce qui concerne l'obtention des composés de départ par voie chimique, une troisième variante peut aussi être envisagée.

Celle-ci consiste, dans un premier temps à préparer une solution des sels des premiers et seconds éléments de la même façon que décrit dans la première étape de la seconde variante du mode précédent.

Dans un seconde temps, on fait réagir la solution précitée avec un agent précipitant.

Ce dernier peut se présenter sous forme liquide, solide ou gazeuse. Cependant, selon un mode de réalisation préféré de l'invention, la réaction de précipitation est effectuée avec un agent précipitant sous forme liquide.

On peut utiliser à ce titre les amines aliphatiques, cycliques, benzéniques ou les ammoniums quaternaires dans la mesure où de tels agents donnent, en réagissant avec la solution des sels métalliques, un précipité insoluble dans l'eau.

Selon un mode particulier, on choisit l'agent précipitant parmi l'ammoniaque ou un précurseur comme l'urée, la méthylamine, la diméthylamine, la triméthylamine, l'éthylamine, la diéthylamine, la triéthylamine, la dodécylamine, l'oléylamine, la cyclohexylamine, l'aniline.

L'agent précipitant peut être utilisé pur ou dilué dans un solvant.

On peut utiliser tout solvant y compris l'eau miscible avec la solution des sels dans la mesure où il solubilise l'agent précipitant.

A titre d'exemple, on peut citer les alcools saturés comme l'éthanol, le propanol, l'isopropanol.

Les alcools polyhydroxylés conviennent également à la mise en oeuvre de l'invention. Ainsi, on peut citer notamment l'éthylène glycol, le propylène glycol.

Il est de même possible d'utiliser des esters d'acides hydroxycarboxyliques comme le carbonate d'éthylène.

La normalité de la solution de l'agent précipitant est calculée en fonction de la normalité de la solution aqueuse des sels.

Généralement, la concentration en agent précipitant est comprise entre 0,1 et 5M.

Le rapport molaire de l'agent précipitant sur les sels varie habituellement de 1 à 10.

La mise en contact de la solution des sels avec l'agent précipitant, pur ou dilué, est effectuée indifféremment en introduisant la solution dans l'agent précipitant ou inversement.

Le cas de l'introduction simultanée des réactifs est de même possible.

Cependant, on procède habituellement en introduisant la solution des sels dans l'agent précipitant, pur ou dilué.

On met de préférence en contact les deux réactifs, c'est-à-dire la solution précitée et l'agent précipitant goutte à goutte.

Pendant l'introduction, il est préférable de maintenir le milieu sous agitation.

On met en oeuvre la réaction à une température comprise entre 0 et 100°C, la limite supérieure étant la vaporisation du mélange de la solution des sels et de l'agent précipitant.

De préférence, on travaille à température comprise entre 20 et 35°C.

Dans le cas particulier où l'on utilise l'urée comme agent précipitant, on introduit celle-ci dans la solution des sels précités, puis on chauffe sous agitation le mélange ainsi obtenu, à une température comprise entre 60 et 65°C, pour décomposer l'urée et libérer ainsi dans le milieu l'agent précipitant proprement dit.

Après l'addition des réactifs, on maintient en général l'agitation pendant une durée de 1 à 3 heures.

On peut éventuellement procéder ensuite à un vieillissement du milieu réactionnel, c'est-à-dire laisser celui-ci reposer pendant une durée comprise entre 6 et 15 heures.

La séparation du précipité est effectuée selon tout moyen connu de l'homme de l'art, comme la filtration, la centrifugation.

Par la suite, on peut éventuellement laver ledit précipité, par exemple avec le solvant dans lequel l'agent précipitant est solubilisé.

Dans un troisième temps, le précipité est séché par tout moyen connu.

Habituellement, le séchage est effectué sous vide à 50°C ou sous air à température ambiante.

La durée de séchage est comprise entre 3 et 12 heures.

La voie chimique d'obtention d'un composé de départ comprend enfin une dernière et troisième étape dans laquelle on calcine les produits séchés dans les conditions qui viennent d'être décrites.

Cette troisième étape a pour but essentiellement d'éliminer les sels ou anions d'acides des produits séchés afin d'obtenir le composé de départ désiré.

La calcination est effectuée sous une atmosphère oxydante, inerte ou sous vide.

Habituellement, on utilise de l'air ou un mélange air-oxygène en tant qu'atmosphère oxydante.

On peut aussi calciner le produit sous un gaz inerte du type azote ou gaz rares comme l'argon ; ceux-ci étant utilisés seuls ou en mélange.

En ce qui concerne le vide, la calcination est réalisée sous une pression variant entre 1 et 10 mmHg.

La température à laquelle on calcine le produit séché est celle à partir de laquelle on a élimination des anions ou sels et elle est comprise habituellement entre 600°C et 1150°C.

La durée de la calcination est généralement comprise entre 1 et 3 heures.

Par ailleurs, le composé de départ issu des diverses variantes de préparation peut éventuellement subir un broyage avant d'être soumis au traitement thermique selon l'invention.

Le procédé de l'invention consiste essentiellement à faire subir un traitement thermique au composé de départ en présence de carbone.

Le carbone peut être apporté sous toute forme convenable.

Par exemple, il peut s'agir de carbone graphite ou de noir de carbone.

On met alors en présence les produits en mélangeant intimement le carbone avec le composé de départ. Si nécessaire, on effectue un broyage de ces produits.

Le carbone peut aussi être apporté par le réacteur même. Ainsi, on s'est aperçu que l'on pouvait mettre en oeuvre le procédé de l'invention en réalisant simplement le traitement thermique dans un réacteur ou un creuset à base de carbone graphite. Ce cas est envisageable pour de faibles épaisseurs de réactifs ou pour de petits creusets.

Le carbone peut éventuellement être apporté par une matière organique carbonisable comme une résine, par exemple du type résine phénolique et plus particulièrement les produits de condensation phénol/formaldéhyde du type novolac ou resol, les résines acryliques et les résines polyphénylènes.

La quantité de carbone utilisée lors du traitement de l'invention varie généralement entre 0,05 et 0,8 mole de carbone, par mole du premier élément du composé de départ. Cette quantité est fonction du niveau de réduction souhaité du premier élément.

Dans le cas où le carbone est apporté par le réacteur seul, le niveau de réduction souhaité sera obtenu en jouant sur le couple temps de séjour, température.

Le traitement thermique se fait à une température telle que puisse se produire la réduction du premier élément du composé de départ par le carbone. D'autre part, il est préférable d'opérer dans des conditions telles qu'il y ait au moins fusion partielle de la masse réactionnelle.

Les conditions de température vont dépendre de la nature du composé de départ.

Les températures permettant cette fusion partielle seront déterminées par analyse thermodifférentielle sous air ou sous gaz réducteur du composé de départ.

On se place ensuite pour le traitement à une température au moins égale à celle ainsi déterminée.

Généralement, dans le cas où le composé de départ comprend du titane, cette température est d'au moins 1400°C, plus particulièrement 1450°C. Pour un composé de départ à base de niobium et de vanadium, cette température est d'au moins 1000°C.

Par ailleurs, le traitement thermique peut se dérouler sous une atmosphère non oxydante. De préférence, il a lieu sous vide ou sous gaz neutre. Par gaz neutre, on entend l'azote ou les gaz rares comme l'argon.

Il peut être aussi avantageux de travailler sous une atmosphère réductrice, par exemple sous hydrogène ou methane éventuellement en mélange dans de l'argon.

Il est à noter que le procédé de l'invention permet de préparer des composés dans lesquels le rapport atomique, premier élément/somme des seconds éléments éventuellement partiellement substitués peut être différent de 1.

De préférence dans ce cas, ce rapport est fixé lors du procédé de préparation du composé de départ. Toutefois, il est possible de partir d'un composé de départ pour lequel ce rapport est égal à 1. Dans ce cas on effectue le traitement thermique en présence d'une quantité supplémentaire de premier ou de second élément, généralement sous forme d'oxyde. Par exemple, si on veut obtenir un produit plutôt riche en titane, on pourra lors du traitement thermique ajouter une certaine quantité de $TiO_2$. Pour un produit plutôt riche en terre-rare, en praseodyme par exemple, on pourra effectuer le traitement thermique en présence d'un oxyde de terre-rare, $Pr_6O_{11}$ notamment.

Dans le cas particulier des produits à base de titane et de terres-rares, on pourra ainsi se placer dans des conditions telles que l'on obtienne un composé final dans lequel le rapport atomique titane/somme des terres-rares est compris entre 0,5 et 1,6.

Toujours dans ce même cas et plus particulièrement lorsque le rapport précité est inférieur à 1, il est avantageux d'effectuer le traitement en présence d'un fondant. Comme fondant, on peut citer les oxydes alcalins ou $B_2O_3$. $B_2O_3$ est particulièrement intéressant par son caractère volatil permettant une élimination en fin de traitement par sublimation.

Il est à noter toutefois que les fondants peuvent être utilisés d'une manière générale, si nécessaire, dans le procédé de l'invention, indépendamment de la nature des éléments des composés préparés et de leur rapport respectifs.

Enfin, dans le cas des composés de l'invention pour lesquels le second élément peut être partiellement substitué, le troisième élément substituant peut être apporté sous forme d'oxyde, d'hydroxyde ou de carbonate, dans le milieu réactionnel.

Une fois le traitement thermique réalisé, on refroidit le produit obtenu, on obtient alors un composé dans lequel le premier élément a été réduit par rapport au composé de départ.

A l'issue de ce traitement, il est possible d'effectuer un recuit du composé obtenu dans le but de le purifier. Dans certains cas, ce recuit permet l'obtention de composés du premier groupe d'une grande pureté. Ce recuit se fait sous vide ou sous atmosphère réductrice du type décrit plus haut. On peut notamment passer par une phase fondue.

Le procédé de l'invention permet d'obtenir une large gamme de composés qui vont maintenant être décrits plus précisément.

L'obtention de tel ou tel type de composés se fait en jouant sur un certain nombre de paramètres du procédé.

Comme paramètres importants, on peut mentionner la quantité de carbone utilisé, la durée et la température maximale du traitement, le rapport atomique premier élément/somme des seconds éléments, la vitesse de montée en température.

On notera, d'une manière générale, que les composés du groupe 1 de l'invention étant les composés les plus réduits tout ce qui tend à favoriser la réduction favorise l'obtention de composés de ce groupe.

En ce qui concerne la quantité de carbone, on a pu noter que dans le cas d'une utilisation d'une quantité d'au moins 0,2 mole de carbone, on favorisait l'apparition de composés correspondant au premier groupe qui sera décrit ci-dessous.

De même, une durée de traitement plutôt longue, on entend par là la durée du palier de température auquel est maintenu le composé pendant le traitement, entraîne aussi l'apparition de ce type de composés.

Ainsi, une fois la température de palier atteinte, il est préférable de maintenir celle-ci pendant un temps relativement long d'environ 2 heures pour obtenir les composés du premier groupe.

A l'inverse des quantités de carbone plus faibles et/ou des durées plutôt courtes vont conduire de préférence à des produits des deuxièmes, troisièmes et quatrièmes groupes qui seront décrits plus loin.

Dans ce dernier cas, l'orientation préférentielle entre chacun des trois groupes pourra se faire en jouant sur le rapport atomique premier élément/somme des seconds éléments.

Toujours dans le cas de ces groupes, il est préférable de monter rapidement en température par exemple de 200°C à 600°C/h et de faire un palier court pour se trouver le moins longtemps possible dans des conductions réductrices. La durée de ce palier est inférieure à l'heure par exemple de 30 minutes environ.

Les composés selon l'invention vont maintenant être étudiés plus particulièrement.

La présente invention concerne tout d'abord un premier groupe de composés (I) correspondant à la formule suivante :

$$(I) \qquad AB_xO_y$$

dans laquelle :

. A représente au moins un élément choisi parmi les terres-rares, A pouvant être éventuellement partiellement substitué par au moins un élément des groupes 2A, 3B, 5B ou des actinides de la classification périodique des éléments,

. B représente un élément choisi dans le groupe 4A ou 5A de la classification périodique des éléments,

. x et y vérifient les inégalités suivantes :

$2 \leqq y \leqq 4$

. si $x < 1$

$1,5 + 1,25x \leqq y \leqq 1,5 + 1,75x$

. si $x \geqq 1$

$1,5 + 1,25 x \leqq y \leqq 1,5 + 1,5x$

. à l'exclusion des composés de formule (I) dans laquelle A est une terre-rare, B est le titane ou le vanadium, $x = 1$ et $y = 3$.

Selon une première caractéristique préférentielle du composé (I), l'élément B, est présent majoritairement ou entièrement à l'état réduit.

Il est rappelé que le terme "réduit" signifie que l'élément considéré présente un nombre d'oxydation (généralement positif) mais inférieur à son nombre d'oxydation maximum.

Comme on l'a indiqué plus haut, cet élément B peut se présenter en partie avec un nombre d'oxydation donné et pour l'autre partie avec un nombre d'oxydation différent.

Selon un premier type de composés de ce premier groupe, l'élément B est le titane.

Par ailleurs, un second type de composés de ce premier groupe est représenté par les composés (I) à base de vanadium ou de niobium en tant qu'élément B.

Concernant le constituant A du composé (I) selon l'invention, celui-ci peut être notamment choisi parmi les terres-rares.

Plus particulièrement, A peut représenter au moins un élément choisi parmi le lanthane, le cérium, le praséodyme et le néodyme.

Ce second élément peut être éventuellement partiellement substitué par un troisième élément. Ce dernier est choisi dans les groupes 2A, 3B, 5B ou dans le groupe des actinides.

Comme troisième élément de substitution, on peut citer plus particulièrement le calcium pour le groupe 2A, le thallium pour le groupe 3B, le bismuth pour le groupe 5B et le thorium pour les actinides.

Il est précisé que A peut représenter un ou plusieurs éléments des groupes précités, quelles que soient les combinaisons envisagées.

Une autre caractéristique des composés (I) du premier groupe précité est constituée par le rapport atomique de l'élément B à la somme des éléments A, ou en d'autres termes le coefficient stoechiométrique x.

En effet, selon une première variante, ledit coefficient varie entre 1,6 et 1.

Selon un mode de réalisation particulier, le composé (I) est à base de titane et d'une terre-rare.

De préférence, celle-ci est le praséodyme.

Diverses formules correspondent à ce mode de réalisation.

Ainsi, un composé (I) peut être défini par la formule suivante : $PrTiO_{2,79}$. L'analyse de ce composé indique la présence de titane aux degrés d'oxydation (II) et (III).

On peut citer aussi le composé de formule $PrTi_{1,6}O_{3,83}$.

Par ailleurs, ce dernier composé possède une maille de structure quadratique ou présentant un caractère léger d'orthorhombicité et les paramètres de celle-ci sont les suivants :

a = 5,51 Å, b étant égal ou sensiblement égal à a

c = 7,63 Å

Enfin, ce même composé présente un spectre (correspondant à la figure 1) obtenu par diffraction des rayons X dont les raies (Raies Kα cuivre) sont les suivantes :

| n° raie | 1 | 2 | 3 | 4 | 5 | 6 | 7 |
|---|---|---|---|---|---|---|---|
| distance (h,k,l,) | 3,886 | 2,751 | 2,704 | 2,574 | 2,247 | 2,946 | 1,888 |
| intensité | f | TF | tf | tf | f | F | tf |

| n° raie | 8 | 9 | 10 | 11 | 12 | 13 |
|---|---|---|---|---|---|---|
| distance (h,k,l,) | 1,741 | 1,702 | 1,697 | 1,589 | 1,378 | 1,374 |
| intensité | tf | tf | tf | m | f | f |

Les codes des intensités sont les suivants :

| Codes | tf | f | mf | m | mF | F | TF |
|---|---|---|---|---|---|---|---|
| % | 0-10 | 10-20 | 20-40 | 40-60 | 60-80 | 80-90 | 90-100 |

Les pourcentages sont exprimés par rapport à la raie la plus intense à laquelle on a donné arbitrairement la valeur 100.

L'invention concerne aussi selon une seconde variante des composés du groupe I présentant un coefficient stoechiométrique x compris entre 0,5 et 1, dont les formules sont les suivantes : $PrTi_{0,77}O_{2,61}$ et $PrTi_{0,83}O_{2,75}$, $PrTiO_{2,9}$.

Enfin, pour des valeurs de x et y fixées, les différents composés de ce premier groupe obtenus en changeant le ou les éléments A présentent des spectres homologues.

On entend par là qu'ils présentent des raies pour des valeurs de distances respectives sensiblement identiques ou voisines, les intensités relatives des raies les unes par rapport aux autres étant sensiblement maintenues d'un spectre à l'autre.

En conclusion et d'une manière générale, les composés du premier groupe peuvent être considérés comme une solution solide soit de l'élément A, soit de l'élément B dans une structure pérovskite de type $PrTiO_3$ dont les paramètres a, b et c évoluent continûment selon la composition (rapport A/B et état de réduction de B) entre une structure orthorhombique et une structure quadratique.

Outre les composés décrits précédemment, l'invention concerne aussi un second groupe de composés, composés (II).

Ces composés sont d'une part à base de titane partiellement réduit au sens défini plus haut. En effet, le titane est présent aux degrés d'oxydation (III) et (IV).

D'autre part, ils sont à base d'oxygène et d'au moins une terre-rare, cette terre-rare étant éventuellement partiellement substituée par au moins un élément choisi dans les groupes 2A, 3B, 5B ou des actinides. Plus particulièrement, cette terre-rare est choisie dans le groupe de lanthane, du cérium, du praséodyme et du néodyme.

L'élément de substitution peut être plus particulièrement le calcium, le thallium, le bismuth ou le thorium.

Une caractéristique importante desdits composés est que le rapport atomique du titane à la somme des terres-rares varie entre 0,9 et 0,75.

Par ailleurs, ces composés peuvent présenter un paramètre de maille c égal à $31,2 \pm 0,2$ Å.

Selon un premier type de composés de ce second groupe, le composé (II) comprend du titane, de l'oxygène et du praséodyme en tant que terre-rare et présente un spectre obtenu par diffraction des rayons X correspondant à la figure 2 et dont les raies (raies $K\alpha$ cuivre) sont répertoriées dans le tableau ci-dessous :

| n° raie | 1 | 2 | 3 | 4 | 5 | 6 | 7 | 8 | 9 |
|---|---|---|---|---|---|---|---|---|---|
| distance (h,k,l,) | 15,284 | 7,728 | 5,159 | 3,879 | 3,110 | 2,501 | 2,570 | 2,281 | 2,230 |
| intensité | tf | tf | tf | tf | TF | tf | f | tf | mf |

Les intensités sont évaluées selon le même code que celui donné plus haut.

Par ailleurs, le composé (II) correspondant à ce premier type possède une maille quadratique ou présentant un caractère léger d'orthorhombicité. En effet, il n'est pas possible étant donné la précision des mesures de déterminer si les paramètres a et b de la maille sont parfaitement identiques ou non.

Les paramètres de mailles sont les suivants :

a = 5,406 Å avec b égal ou sensiblement égal à a

c = 31,19 Å.

Selon un second type de composés de ce même second groupe, le composé (II) est à base de titane, d'oxygène et de néodyme en tant que terre-rare.

Dans ce cas, le paramètre c de la maille dudit composé est égal à 31,27 Å.

Un troisième type particulier correspond à un composé (II) comprenant le lanthane comme terre-rare, outre le titane et l'oxygène.

Un tel composé présente un paramètre de maille c de 31,27 Å.

Sans vouloir limiter la partie de l'invention, les composés de ce groupe II présenteraient des analogies structurales avec la phase d'Aurevillius du type $Bi_4Ti_3O_{12}$.

Enfin pour un rapport atomique du titane à la somme des terres-rares fixé et pour un état d'oxydation du titane fixé, les différents composés de ce second groupe obtenus en changeant la terre-rare présentent des spectres homologues.

On entend par là qu'ils présentent des raies pour des valeurs de distances respectives sensiblement identiques ou voisines, les intensités relatives des raies les unes par rapport aux autres étant sensiblement maintenues d'un spectre à l'autre.

La présente invention concerne de même aussi un troisième groupe de composés, composés (III), comprenant du titane, au moins une terre-rare, cette terre-rare étant éventuellement partiellement substituée par au moins un élément choisi dans les groupes 2A, 3B, 5B ou des actinides, et de l'oxygène.

L'élément de substitution peut être plus particulièrement le calcium, le thallium, le bismuth ou le thorium.

Dans ces nouveaux composés, le titane est présent aux degrés d'oxydation (III) et (IV) et la terre-rare est de préférence choisie parmi le lanthane, le cérium, le praséodyme et le néodyme.

De plus, ces composés présentent un rapport atomique du titane à la somme des terres-rares compris entre 1 et 0,95.

Selon un type particulier, un composé (III) est à base de titane, d'oxygène et de praséodyme.

Dans ce cas, la maille cristalline est du type orthorhombique et ses paramètres sont les suivants :
a = 5,1 Å
b = 7,75 Å
c = 27,55 Å

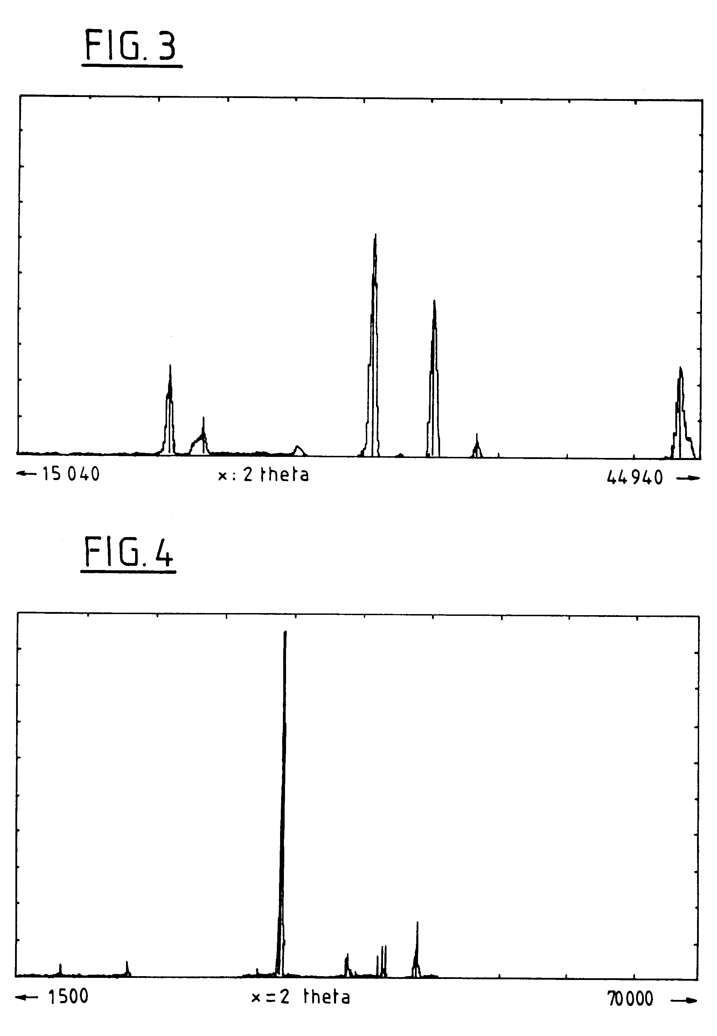

Par ailleurs, ce même composé (III) présente un spectre obtenu par diffraction des rayons X correspondant à la figure 3 et dont les raies (raies $K\alpha$ du cuivre) sont répertoriées dans le tableau ci-dessous :

| n° raies | 1 | 2 | 3 | 4 | 5 | 6 |
|---|---|---|---|---|---|---|
| distance (h, k, l,) | 4,100 | 3,832 | 2,919 | 2,689 | 2,550 | 2,050 |
| intensités | mf | f | TF | mF | tf | mf |

Les intensités sont évaluées selon le même code que précédemment.

Enfin pour un rapport atomique du titane à la somme des terres-rares fixé et pour un état d'oxydation du titane fixé, les différents composés de ce troisième groupe obtenus en changeant la terre-rare présentent des spectres homologues.

On entend par là qu'ils présentent des raies pour des valeurs de distances respectives sensiblement identiques ou voisines, les intensités relatives des raies les unes par rapport aux autres étant sensiblement maintenues d'un spectre à l'autre.

Sans vouloir limiter la portée de l'invention, les composés du groupe III seraient isotypes des phases de structure cristalline orthorhombique du type $Ln_2Ti_2O_7$ (Ln représentant une terre-rare) avec toutefois des valeurs de paramètres de maille différents notamment pour c.

L'invention concerne enfin un quatrième groupe de composés (IV).

Celui-ci est à base de titane aux degrés d'oxydation (III) et (IV). En outre, il comprend une terre-rare choisie parmi le lanthane, le cérium, le néodyme et plus particulièrement le praséodyme, cette terre-rare étant éventuellement partiellement substituée par au moins un élément choisi dans les groupes 2A, 3B, 5B ou des actinides ; et de l'oxygène.

L'élément de substitution peut être plus particulièrement le calcium, le thallium, le bismuth ou le thorium.

Ce dernier groupe de composé présente un rapport atomique du titane à la somme des terres-rares de 0,66.

Sans volonté là encore de se limiter, les composés (IV) présenteraient des analogies structurales avec les phases d'Aurevillius du type $Bi_3TiNbO_9$.

Par ailleurs, les composés (IV) se présentent sous la forme d'une maille cristalline quadratique ou possédant éventuellement un caractère léger d'orthorhombicité. En effet, il n'est pas possible, étant donné la précision des mesures, de déterminer si les paramètres a et b de la maille sont parfaitement identiques ou non.

Plus particulièrement, un composé IV à base de praséodyme présente les paramètres de maille suivants :
a = 5,48 Å avec b égal ou sensiblement égal à a
c = 27,4 Å.

Ce même composé présente enfin un spectre RX correspondant à la figure 4 dont les raies ($K\alpha$ du cuivre) sont répertoriées ci-dessus :

| N° raie | 1 | 2 | 3 | 4 | 5 |
|---|---|---|---|---|---|
| distance (h, k, l,) | 13,7912 | 6,8610 | 3,4391 | 3,1801 | 2,5793 |
| intensité | tf | tf | tf | TF | tf |

| N° raie | 6 | 7 | 8 | 9 | 10 |
|---|---|---|---|---|---|
| distance (h, k, l,) | 2,3704 | 2,3500 | 2,3299 | 2,1695 | 2,1603 |
| intensité | tf | tf | tf | tf | tf |

Enfin, pour un état d'oxydation du titane fixé, les différents composés de ce quatrième groupe obtenus en changeant la terre-rare présentent des spectres homologues.

On entend par là qu'ils présentent des raies pour des valeurs de distances respectives sensiblement identiques ou voisines, les intensités relatives des raies les unes par rapport aux autres étant sensiblement maintenues d'un spectre à l'autre.

La présente invention concerne aussi un composé défini par son procédé d'obtention.

Ce composé est à base d'un premier élément se présentant au moins pour une partie à l'état réduit au sens donné plus haut et choisi parmi les groupes 4A et 5A, d'au moins un second élément choisi parmi les terre-rares, ce second élément étant éventuellement partiellement substitué par au moins un troisième élément choisi dans les groupes 2A, 3B, 5B ou des actinides et d'oxygène.

De plus ce composé ne doit pas correspondre à la formule suivante :

$$AB_xO_y$$

dans laquelle :

A représente une terre-rare,

B représente le titane ou le vanadium,

x = 1

y = 3

La caractéristique de ce composé est qu'il est susceptible d'être obtenu en faisant subir un traitement thermique en présence de carbone à un composé de départ comprenant un premier élément à l'état oxydé au sens donné plus haut, au moins un second élément éventuellement partiellement substitué et de l'oxygène.

Il est à noter que tout ce qui a été dit plus haut en ce qui concerne le procédé de préparation s'applique entièrement ici et rentre donc dans la définition du produit.

Des exemples vont maintenant être donnés.

EXEMPLE 1 : Préparation du composé de départ.

On part de 5300 g d'un sol de titane à 15 % en poids de $TiO_2$.

Le pH de la suspension est de 2.

On mélange ensuite le sol de titane à 4350 g d'une solution de nitrate de praséodyme en solution aqueuse.

Après homogénéisation du mélange par agitation, celui-ci est séché par atomisation.

Le séchage a lieu dans le réacteur "flash" décrit dans le brevet français n° 2 431 321 .

La température d'entrée des gaz est de 550°C, la température de séchage est de 150°C.

2,45 kg de produit sont récupérés. Celui-ci est constitué d'agglomérats sphériques de granulométrie comprise entre 1 et 10 μm.

Il est ensuite calciné sous air à 1150°C pendant 6 heures.

L'analyse du produit calciné indique un composé de formule chimique $Pr_2Ti_2O_7$.

EXEMPLE 2 - Composé du groupe (II). Apport du carbone par le creuset.

On calcine sous vide 5 g du composé de départ obtenu comme décrit dans l'exemple 1 dans un creuset en graphite.

EP 0 493 241 A1

La vitesse de montée en température est de 600°C/h. La température de palier est de 1700°C et est maintenue pendant 30 minutes.

Le produit est ensuite refroidi à l'inertie du four.

L'analyse par diffraction des rayons X (raie Kalpha du cuivre) indique un composé majoritaire du groupe (II).

Cette analyse donne aussi un spectre correspondant à la figure 2 et dont les raies sont répertoriées ci-dessous :

```
n° raie     1      2      3      4      5      6      7      8      9

distance    15,284 7,728 5,159 3,879 3,110  2,501  2,570  2,281 2,230
(h, k, l,)
intensité   tf     tf     tf     tf     TF     tf     f      tf     mf
```

Par ailleurs les paramêtres de maille sont les suivants:
    a = 5,406 Å avec b sensiblement égal ou égal à a
    c = 31,19 Å

EXEMPLE 3 - Composé du groupe (II). Apport du carbone par le creuset.

On calcine sous vide 5 g du composé de départ obtenu comme décrit dans l'exemple 1 dans un creuset en graphite.

La vitesse de montée en température est de 600°C/h.

La température de palier est de 1500°C et est maintenue pendant 30 minutes.

Le produit est ensuite refroidi à l'inertie du four.

L'analyse chimique du produit résultant montre que l'on a obtenu le même composé majoritaire que celui de l'exemple 2.

EXEMPLE 4 - Composé du groupe (II) à base de néodyme.

. Le composé de départ est obtenu selon une procédure identique à celle décrite dans l'exemple 1, les réactifs étant d'une part un sol de titane et d'autre part du nitrate de néodyme.

L'analyse chimique du produit résultant indique une composition du type $Nd_2Ti_2O_7$.

. On calcine sous vide et dans un creuset en graphite 5 g d'un mélange constitué du composé de départ obtenu précédemment et de 0,2 mole de carbone graphite.

La vitesse de montée en températwe est de 600°C/h.

La température de palier est de 1500°C et est maintenue pendant 30 minutes.

Le produit est ensuite refroidi à l'inertie du four.

L'analyse par diffraction X permet de retrouver des spectres analogues à ceux qui ont été décrits pour les composés du type I, II et III. On a donc obtenu un mélange de ces produits, le composé II étant majoritaire.

L'analyse par diffraction X indique aussi un paramêtre c de la maille du produit majoritaire de 31,2 Å. Le spectre est homologue à celui de la figure 2.

EXEMPLE 5 - Composés des groupes (I) et (II) à base de lanthane.

Le composé de départ est obtenu par nébulisation d'un mélange constitué d'une part un sol de titane en léger excès et d'autre part du nitrate de lanthane.

La nébulisation est effectuée à une température de 1000°C pendant 20 secondes.

L'analyse chimique du produit résultant indique une composition du type $La_2Ti_2O_7$.

. On calcine sous vide et dans un creuset en graphite 5 g d'un mélange constitué du composé de départ obtenu précédemment et de 0,2 mole de carbone graphite.

La vitesse de montée en température est de 600°C/h.

La température de palier est de 1500°C et est maintenue pendant 30 minutes.

Le produit est ensuite refroidi à l'inertie du four.

L'analyse par diffraction X du produit résultant indique un mélange des composés des groupes (I) et (II),

14

EP 0 493 241 A1

le premier (I) étant majoritaire.

Cette analyse indique aussi un paramètre c de la maille du composé (II) de 31,27 Å. Ce composé présente un spectre homologue à celui de la figure 2.

EXEMPLE 6 - Composé du groupe (III). Apport du carbone par le creuset.

On calcine sous vide 5 g du composé de départ obtenu comme décrit dans l'exemple 1 dans un creuset en graphite.

La vitesse de montée en température est de 600°C/h.

La température de palier est de 1500°C et est maintenue pendant 30 minutes.

Le produit est ensuite refroidi à l'inertie du four.

L'analyse chimique du produit résultant indique que l'on obtient majoritairement un composé du groupe (III).

L'analyse par diffraction des rayons X (raie Kalpha du cuivre) donne un spectre correspondant à la figure 3 et dont les raies sont répertoriées ci-dessous :

| n° raies | 1 | 2 | 3 | 4 | 5 | 6 |
|---|---|---|---|---|---|---|
| distances | 4,100 | 3,832 | 2,919 | 2,689 | 2,550 | 2,050 |
| (h, k, l,) | | | | | | |
| intensités | mf | f | TF | mF | tf | |

Par ailleurs les paramêtres de maille sont les suivants:

a = 5,1 Å

b = 7,75 Å

c = 27,55 Å

Une formule approximative du produit est $Pr_2Ti_2O_{6,5}$.

EXEMPLE 7 - Composé du groupe (I).

On calcine sous vide et dans un creuset en graphite 200 g d'un mélange constitué du composé de départ obtenu comme décrit dans l'exemple 1 et de 0,8 mole de carbone graphite.

La vitesse de montée en température est de 200°C/h.

La température de palier est de 1600°C et est maintenue pendant 2 heures.

Le produit est ensuite refroidi à l'inertie du four.

L'analyse chimique du produit résultant indique que l'on obtient un composé du groupe (I) de formule $PrTiO_{2,9}$.

EXEMPLE 8 - Composé du groupe (I).

On calcine sous vide et dans un creuset en graphite 5 g d'un mélange constitué du composé de départ obtenu comme décrit dans l'exemple 1 et de 1 mole de carbone graphite.

La vitesse de montée en température est de 200°C/h.

La température de palier est de 1600°C et est maintenue pendant 2 heures.

Le produit est ensuite refroidi à l'inertie du four.

L'analyse chimique du produit résultant indique que l'on obtient un composé du groupe (I) de formule $PrTiO_{2,79}$ et 2% de $PrTiO_3$.

EXEMPLE 9 - Composé du groupe (I).

On calcine sous vide et dans un creuset en graphite 5 g d'un mélange constitué du composé de départ obtenu comme décrit dans l'exemple 1, de 0,4 mole de carbone graphite et 0,4 mole de praséodyme sous la forme de $Pr_6O_{11}$.

La vitesse de montée en température est de 200°C/h.

La température de palier est de 1600°C et est maintenue pendant 2 heures.

15

Le produit est ensuite refroidi à l'inertie du four.

L'analyse chimique du produit résultant indique que l'on obtient un composé du groupe (I) de formule $PrTi_{0,83}O_{2,75}$.

EXEMPLE 10 : Préparation d'un composé de type (I)

On calcine un mélange de 5 g comprenant :
– 0,5 mole du composé de départ préparé dans l'exemple 1,
– 0,3 mole de praséodyme sous forme $Pr_6O_{11}$,
– 0,2 mole de $B_2O_3$.

La calcination est effectuée dans un creuset en graphite à une température de 1500°C sous un gaz comprenant 10% hydrogène dans l'argon.

La montée en température est de 200°C/h.

La durée du palier à 1500°C est de 4 heures.

Le produit est ensuite refroidi à l'inertie du four.

L'analyse du composé obtenu indique la composition chimique suivante :

$PrTi_{0,77}O_{2,61}$.

EXEMPLE 11 - Composé du groupe (I).

On calcine sous vide et dans un creuset en graphite 5 g d'un mélange constitué du composé de départ obtenu comme décrit dans l'exemple 1, de 0,5 mole de carbone graphite et de 1,2 moles de $TiO_2$.

La vitesse de montée en température est de 200°C/h.

La température de palier est de 1600°C et est maintenue pendant 2 heures.

Le produit est ensuite refroidi à l'inertie du four.

L'analyse chimique du produit résultant indique un composé du groupe (I) dont la composition est la suivante : $PrTi_{1,6}O_{3,83}$.

L'analyse par diffraction des rayons X (raie Kalpha du cuivre) donne un spectre correspondant à la figure 1 et dont les raies sont répertoriées ci-dessous :

| n° raie | 1 | 2 | 3 | 4 | 5 | 6 | 7 |
|---|---|---|---|---|---|---|---|
| distance (h, k, l,) | 3,886 | 2,751 | 2,704 | 2,574 | 2,247 | 2,946 | 1,888 |
| intensité | f | TF | tf | tf | f | F | tf |

| n° raie | 8 | 9 | 10 | 11 | 12 | 13 |
|---|---|---|---|---|---|---|
| distance (h, k, l,) | 1,741 | 1,702 | 1,697 | 1,589 | 1,378 | 1,374 |
| intensité | tf | tf | tf | m | f | f |

Par ailleurs les paramètres de maille sont les suivants:
a = 5,51 Å, b étant égal ou sensiblement égal à a
c = 7,63 Å.

EXEMPLE 12 - Composé du groupe (I). Apport du carbone par le creuset.

On calcine sous vide et dans un creuset en graphite 5 g d'un mélange constitué du composé de départ obtenu comme décrit dans l'exemple 1 et de 1,2 moles de $TiO_2$.

La vitesse de montée en température est de 200°C/h.

La température de palier est de 1600°C et est maintenue pendant 2 heures.

Le produit est ensuite refroidi à l'inertie du four.

L'analyse chimique du produit résultant indique un composé du groupe (I) dont la composition est la suivante : $PrTi_{1,6}O_{3,90}$.

EXEMPLE 13 - Composés des groupes (III) et (IV)

On calcine sous vide dans un creuset graphite 5 g de poudre constituée d'un mélange de $Pr_2Ti_2O_7$ obtenu comme décrit dans l'exemple 1 et de 0,6 mole de praséodyme sous forme de $Pr_6O_{11}$.

La vitesse de montée en température est de 600°C/h.

La température de palier est de 1500°C et est maintenue pendant 30 minutes.

Le produit est ensuite refroidi à l'inertie du four.

On obtient une poudre comprenant majoritairement des composés du groupe (IV) et du groupe (III).

Le composé du groupe III présente un spectre homologue à celui de la figure 3. Pour le composé du groupe IV il s'agit d'un composé présentant le spectre de la figure 4 et les paramètres de maille suivants :

a = 5,48 Å avec b égal ou sensiblement égal à a

c = 27,4 Å

EXEMPLE 14 : - Composé du groupe (I) dopé par le calcium

On calcine 5 g de poudre constituée d'un mélange de 0,8 mole de $Pr_2Ti_2O_7$ obtenu comme décrit dans l'exemple 1, de 0,25 moles de carbone, de 0,2 mole de $CaCO_3$ et de 0,4 mole de $TiO_2$, dans un creuset graphite et sous vide. La vitesse de montée de température est de 200°C/h).

La température de palier est de 1600°C et est maintenue pendant 2 heures.

Le produit est ensuite refroidi à l'inertie du four.

On obtient une poudre de composition approximative $Pr_{0,8}Ca_{0,2}Ti_{1,2}O_{3,2}$ du type $PrTiO_3$.

**Revendications**

**1 -** Procédé de préparation d'un composé à base d'un premier élément choisi dans le groupe 4A ou 5A de la classification périodique des éléments, et présentant au moins pour une partie un nombre d'oxydation inférieur au nombre d'oxydation maximum de ce premier élément, d'au moins un second élément choisi parmi les terres-rares, ce second élément étant éventuellement partiellement substitué par au moins un troisième élément choisi dnas le groupe 2A, 3B, 5B ou des actinides, et d'oxygène, caractérisé en ce qu'on fait subir un traitement thermique en présence de carbone à un composé de départ comprenant ledit premier élément dans un état d'oxydation plus élevé que celui dans lequel il est présent dans le composé préparé, au moins un dudit second élément éventuellement substitué partiellement et de l'oxygène.

**2 -** Procédé selon la revendication 1, caractérisé en ce qu'on effectue le traitement thermique sous atmosphère non oxydante, notamment sous vide, sous gaz neutre ou sous atmosphère réductrice.

**3 -** Procédé selon la revendication 1 ou 2, caractérisé en ce qu'on effectue le traitement thermique dans des conditions telles qu'il y ait au moins fusion partielle de la masse réactionnelle.

**4 -** Procédé selon l'une des revendications précédentes, caractérisé en ce qu'on effectue le traitement thermique après mélange et éventuellement broyage du composé de départ avec du carbone.

**5 -** Procédé selon l'une des revendications 1 à 3, caractérisé en ce qu'on réalise la mise en présence du composé de départ avec du carbone en effectuant le traitement thermique dudit composé dans un réacteur à base de graphite.

**6 -** Procédé selon l'une des revendications précédentes, caractérisé en ce qu'on prépare un composé à base, à titre de premier élément, de titane, de vanadium ou de niobium.

**7 -** Procédé selon l'une des revendications précédentes, caractérisé en ce qu'on prépare un composé à base, à titre de second élément, de thallium ou de bismuth.

**8 -** Procédé selon l'une des revendications précédentes, caractérisé en ce qu'on effectue après le traitement thermique précité, un traitement de recuit sous une atmosphère réductrice ou sous vide.

**9 -** Procédé selon l'une des revendications précédentes, caractérisé en ce qu'on prépare un composé à base de titane, d'au moins une terre-rare et d'oxygène et dans des conditions telles que le rapport atomique du titane à la somme des terres-rares est compris entre 0,5 et 1,6.

**10 -** Procédé selon l'une des revendications précédentes, caractérisé en ce qu'on prépare un composé à base en tant que terre-rare de lanthane, de cérium, de praséodyme ou de néodyme.

**11** - Procédé selon l'une des revendications 9 ou 10, caractérisé en ce que dans le cas où le rapport atomique précité est inférieur à 1, on effectue le traitement thermique en présence d'un fondant.

**12** - Procédé selon l'une des revendications précédentes, caractérisé en ce que l'on utilise un composé de départ obtenu par un procédé comprenant les étapes suivantes :

– on prépare un mélange comprenant une solution d'un sel ou un sol d'oxyde d'un premier élément précité, une solution d'un sel d'au moins un second élément précité.

– on sèche ledit mélange,

– on calcine le produit résultant, ce par quoi on obtient ledit composé de départ.

**13** - Procédé selon la revendication 12, caractérisé en ce que l'on sèche le mélange précité par atomisation par injection de celui-ci dans des gaz ayant une vitesse suffisante pour atomiser le mélange, plus particulièrement en injectant ledit mélange suivant une trajectoire confondue avec l'axe de symétrie d'un écoulement hélicoïdal et puits-tourbillon de gaz chauds assurant la pulvérisation puis le séchage.

**14** - Procédé selon l'une des revendications 1 à 11, caractérisé en ce que l'on utilise un composé de départ obtenu par un procédé comprenant les étapes suivantes :

– on prépare une solution des sels d'un premier élément précité et d'au moins un second élément précité,

– on fait réagir un agent précipitant avec ladite solution,

– on sèche le précipité obtenu,

– on calcine le produit séché, ce par quoi on obtient ledit composé de départ.

**15** - Procédé selon l'une des revendications précédentes caractérisé en ce qu'on utilise comme composé de départ un composé choisi dans le groupe comprenant les titanates, les vanadates, les niobates.

**16** - Composé correspondant à la formule suivante :

$$(I) \qquad AB_xO_y$$

dans laquelle :

. A représente au moins un élément choisi parmi les terres-rares, A pouvant être éventuellement substitué par au moins un troisième élément choisi dans le groupe 2A, 3B, 5B ou des actinides de la classification périodique des éléments,

. B représente un élément choisi dans le groupe 4A ou 5A de la classification périodique des éléments,

. x et y vérifient les inégalités suivantes :

$2,5 \leqq y \leqq 4$ et

. si $x < 1$

$1,5 + 1,25x \leqq y \leqq 1,5 + 1,75x$

. si $x \geqq 1$

$1,5 + 1,25x \leqq y \leqq 1,5 + 1,5x$

. à l'exclusion des composés pour lesquels A est une terre-rare, B est le titane ou le vanadium, x=1 et y = 3.

**17** - Composé selon la revendication 16, caractérisé en ce que l'élément B est présent majoritairement avec un nombre d'oxydation positif mais inférieur à son nombre d'oxydation maximum.

**18** - Composé selon l'une des revendications 16 ou 17, caractérisé en ce que l'élément B est le titane.

**19** - Composé selon l'une des revendications 16 ou 17, caractérisé en ce que l'élément B est choisi parmi le vanadium ou le niobium.

**20** - Composé selon l'une des revendications 16 à 19, caractérisé en ce que l'élément A est choisi parmi les terres-rares et plus particulièrement dans le groupe comprenant le lanthane, le cérium, le praséodyme et le néodyme.

**21** - Composé selon l'une des revendications 16 à 20, caractérisé en ce que l'élément A est partiellement substitué par le calcium, le thallium, le bismuth ou le thorium.

**22** - Composé selon l'une des revendications 16 à 21, caractérisé en ce que x varie entre 1,6 et 1.

**23** - Composé selon l'une des revendications 16 à 21, caractérisé en ce que x varie entre 0,5 et 1.

**24** - Composé selon les revendications 18, 20 et 22 ou 23, caractérisé en ce qu'il correspond à l'une des formules suivantes :

$PrTiO_{2,79}$ ; $PrTi_{0,83}O_{2,75}$ ; $PrTi_{0,77}O_{2,61}$ ; $PrTiO_{2,9}$

**25** - Composé selon les revendications 18, 20 et 22, caractérisé en ce qu'il correspond à la formule suivante :

$PrTi_{1,6}O_{3,83}$

**26** - Composé selon la revendication 25, caractérisé en ce que ses paramètres de maille sont les suivants :

$a \simeq b = 5,51$ Å ;

$c = 7,63$ Å.

**27** - Composé selon l'une des revendications 25 ou 26, caractérisé en ce que son spectre obtenu par diffraction des rayons X comprend les raies suivantes :

| n° raie | 1 | 2 | 3 | 4 | 5 | 6 | 7 |
|---|---|---|---|---|---|---|---|
| distance (h, k, 1,) | 3,886 | 2,751 | 2,704 | 2,574 | 2,247 | 2,946 | 1,888 |
| intensité | f | TF | tf | tf | f | F | tf |

| n° raie | 8 | 9 | 10 | 11 | 12 | 13 |
|---|---|---|---|---|---|---|
| distance (h, k, 1,) | 1,741 | 1,702 | 1,697 | 1,589 | 1,378 | 1,374 |
| intensité | tf | tf | tf | m | f | f |

**28** - Composé selon l'une des revendications 16 à 24, caractérisé en ce qu'il présente une structure pérovskite de type $PrTiO_3$.

**29** - Composé à base de titane aux degrés d'oxydation (III) et (IV), d'oxygène et d'au moins une terre-rare plus particulièrement choisie parmi le lanthane, le cérium, le néodyme et le praséodyme, cette terre-rare étant éventuellement partiellement substituée par au moins un élément choisi dans les groupes 2A, 3B, 5B ou des actinides, caractérisé en ce que le rapport atomique du titane à la somme des terres-rares varie entre 0,9 et 0,75.

**30** - Composé selon la revendication 29, caractérisé en ce que le paramètre c de la maille est de 31,2 ± 0,2 Å.

**31** - Composé selon l'une des revendications 29 ou 30 caractérisé en ce que la terre-rare est le praséodyme et en ce que son spectre obtenu par diffraction des rayons X comprend les raies suivantes :

| n° raie | 1 | 2 | 3 | 4 | 5 | 6 | 7 | 8 | 9 |
|---|---|---|---|---|---|---|---|---|---|
| distance (h, k, 1,) | 15,284 | 7,728 | 5,159 | 3,879 | 3,110 | 2,501 | 2,570 | 2,281 | 2,230 |
| intensité | tf | tf | tf | tf | TF | tf | f | tf | mf |

**32** - Composé selon la revendication 31, caractérisé en ce que les paramètres de la maille sont les suivants :
a = 5,406 Å et b égal ou sensiblement égal à a,
c = 31,19 Å.

**33** - Composé selon l'une des revendications 29 ou 30, caractérisé en ce que la terre-rare est le néodyme et en ce que le paramètre c de la maille vaut 31,2 Å.

**34** - Composé selon l'une des revendications 29 ou 30, caractérisé en ce que la terre-rare est le lanthane et en ce que le paramètre c de la maille vaut 31,27 Å.

**35** - Composé à base de titane aux degrés d'oxydation (III) et (IV), d'oxygène et d'au moins une terre-rare plus particulièrement choisie parmi le lanthane, le cérium, le praséodyme et le néodyme, caractérisé en ce que le rapport atomique du titane à la somme des terres-rares varie entre 1 et 0,95.

**36** - Composé selon la revendication 35, caractérisé en ce que la terre-rare est le praséodyme et en ce que les paramètres de la maille sont les suivants :
a = 5,1 Å ; b = 7,75 Å ; c = 27,55 Å.

**37** - Composé selon la revendication 36, caractérisé en ce que le spectre obtenu par diffraction des rayons X comprend les raies suivantes :

| n° raies | 1 | 2 | 3 | 4 | 5 | 6 |
|---|---|---|---|---|---|---|
| distances (h, k, l,) | 4,100 | 3,832 | 2,919 | 2,689 | 2,550 | 2,050 |
| intensités | mf | f | TF | mF | tf | mf |

38 - Composé à base de titane aux degrés d'oxydation III et IV d'au moins une terre-rare et d'oxygène et présentant un rapport atomique titane/somme des terres-rares de 0,66.

39 - Composé selon la revendication 38, caractérisé en ce que la terre-rare est le praséodyme et en ce que son spectre obtenu par diffraction des rayons X présente les raies suivantes :

| N° raie | 1 | 2 | 3 | 4 | 5 |
|---|---|---|---|---|---|
| distance (h, k, l,) | 13,7912 | 6,8610 | 3,4391 | 3,1801 | 2,5793 |
| intensité | tf | tf | tf | TF | tf |

| N° raie | 6 | 7 | 8 | 9 | 10 |
|---|---|---|---|---|---|
| distance (h, k, l,) | 2,3704 | 2,3500 | 2,3299 | 2,1695 | 2,1603 |
| intensité | tf | tf | tf | tf | tf |

40 - Composé à base d'un premier élément choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares, ce second élément étant éventuellement partiellement substitué par au moins un troisième élément choisi dans le groupe 2A, 3B, 5B ou des actinides et d'oxygène, à l'exception d'un composé correspondant à la formule suivante :

$$(I) \qquad AB_xO_y$$

A est une terre-rare

B est le titane ou le vanadium,

dans laquelle x = 1 et y = 3.

caractérisé en ce qu'il est susceptible d'être obtenu en faisant subir un traitement thermique en présence de carbone à un composé de départ comprenant un premier élément dans un état d'oxydation plus élevé que celui dans lequel il est présent dans le composé préparé, au moins un second élément et de l'oxygène.

41 - Composé selon la revendication 40, caractérisé en ce qu'il est susceptible d'être obtenu en calcinant un composé de départ comprenant du niobium ou du vanadium en tant que premier élément.

42 - Composé selon la revendication 40, caractérisé en ce qu'il est susceptible d'être obtenu en calcinant un composé de départ comprenant du titane, au moins une terre-rare éventuellement partiellement substituée et de l'oxygène et en ce que l'on opère dans des conditions telles que le rapport atomique du titane à la somme des terres-rares est compris entre 0,7 et 1,6.

43 - Composé selon l'une des revendications 40 à 42, caractérisé en ce que l'on utilise un composé de départ obtenu par un procédé comprenant les étapes suivantes :

– on prépare un mélange comprenant une solution d'un sel ou un sol d'oxyde d'un premier élément précité, une solution d'un sel d'au moins un second élément précité,

– on sèche ledit mélange notamment en injectant celui-ci suivant une trajectoire confondue avec l'axe de symétrie d'un écoulement hélicoïdal et puits-tourbillon de gaz chauds assurant la pulvérisation puis le séchage,

– on calcine le produit résultant, ce par quoi on obtient ledit composé de départ.

## FIG.1

← 5000    x: 2 theta    70 000 →

## FIG.2

← 4840    x =2 theta    41 000 →

## FIG. 3

← 15 040          x : 2 theta          44 940 →

## FIG. 4

← 1500          x = 2 theta          70 000 →

EP 0 493 241 A1

Office européen
des brevets

**RAPPORT DE RECHERCHE EUROPEENNE**

Numero de la demande

EP 91 40 3518

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 193 460 (RHONE-POULENC SPECIALITES) <br> * revendication 1 * | 1 | C01G23/00 <br> C01G31/00 <br> C01G33/00 |
| D | & FR-A-2 578 240 | | |
| | --- | | |
| A | CHEMICAL ABSTRACTS, vol. 87, no. 2, <br> 11 Juillet 1977, Columbus, Ohio, US; <br> abstract no. 15227, <br> G.V. BAZUEV ET AL: 'Rare earth element <br> orthotitanites' <br> & Zh. Neorg. Khim 1977,vol.22,no.5,pages <br> 1239-1243 | 1 | |
| | --- | | |
| A | US-A-4 696 810 (SHIRASAKI ET AL) <br> * exemple 3 * | 1,16 | |
| | ----- | | |

|  |  |
|---|---|
| | **DOMAINES TECHNIQUES RECHERCHES (Int. Cl.5)** |
| | C01G |

Le présent rapport a été établi pour toutes les revendications

| Lieu de la recherche | Date d'achèvement de la recherche | Examinateur |
|---|---|---|
| BERLIN | 11 FEVRIER 1992 | Jean Paul Clement |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

23